# EUROPEAN PATENT APPLICATION

(11) **EP 1 215 798 A2**
(43) Date of publication of application: **19.06.2002**
(21) Application number: 01125578.3
(22) Date of filing: 25.10.2001
(51) Int. Cl.: H02J 9/06

(54) **System reliability module**

(30) Priority: 25.10.2000 GB 0026102
(71) Applicant: A F Switchgear & Control Panels Limited, Nottinghamshire, NG17 2HU (GB); Marshall, Gary, Maidenhead, Berkshire (GB)
(72) Inventor: Marshall, Gary, Maidenhead, Berkshire (GB); Harris, Mike, Shirland, Derbyshire DE55 6EQ (GB)
(74) Representative: Hughes, Andrea Michelle

(57) **Abstract**

There is provided a system reliability module adapted to be arranged between initiating contacts of a device and another receiving device, the module being tolerant of open circuit, short circuit etc. failures, whilst still maintaining its primary function of receiving initiating contacts and providing an output contact to go forward to the receiving device in the next phase of the process. The module contains monitoring circuits for the auxiliary DC supply, an internal rechargeable battery backed power supply and volt-free relays output alarm contact for every function, which can be monitored by a BMS or an overall supervisory system.

## Description

The present invention concerns a duplex relay or system reliability module to be used as a component in high integrity, control system applications, such as electrical, low-voltage, switchboards to improve the reliability of switchboard operation.

Most control systems fail due to damage or faults in the interconnecting wiring between the initiating contacts in one device and the receiving devices, e.g. relay coils, closing releases, shunt trip coils, undervoltage coils etc., giving rise to open circuits or short circuits.

The aim of the present invention is to provide an intermediate module, which provides redundancy and fault tolerance of control signals, whilst still maintaining the primary function of receiving initiating contacts and providing an output contact to go forward to the receiving device in the next phase of the process.

The module is connected between the input to the system and the receiving device and is preferably arranged as close as possible to the receiving device to minimise the risk of failures between them.

Thus, in accordance with the present invention, there is provided a system reliability module comprising control signal input means; contacts responsive to input control signals; output means providing signals in response to the state of said contacts; a main power supply and an internal back-up battery power supply; characterised by means for monitoring said main power supply and for automatically connecting said back-up power supply when said main power supply falls below a predetermined level; and means for monitoring said input means, said contacts and said output means and for indicating faults or failures.

Although the faults or failures are communicated in any known way, the preferred means is a plurality of LEDs located on the front of said module, arranged to indicate the nature of the fault and/or failure detected.

Preferably, LEDs also indicate the state of the main power supply and/or the internal battery.

There is preferably an indicator (LED) for each of a number of alarm functions, with each alarm function being separately connected to the various parts of the system.

The module preferably operates in a standard non-latching mode and a latching mode. Selection of operating mode is by connections.

The module preferably provides some redundancy in the contacts, by means of relays adapted to be energised to prevent false operation if associated contacts are welded. The preferred module contains monitoring circuits for the auxiliary DC supply, an internal rechargeable battery backed power supply and volt-free relay output alarm contacts for every function, which can be monitored by a BMS or an overall supervisory system.

In summary, in the preferred embodiment, the 'initiating' contacts connect to local 'Loop Limit' circuits, which encode the contact operation into 5mA for 'open' and 16mA for 'closed'. These current loops provide signal integrity over long distances (in excess of 100 metres) to the monitoring SRM200 System Reliability Module whose output contacts connect to the next stage of the control system. By monitoring the Loop currents the SRM200 can distinguish between valid open and closed contacts and short-circuit or open-circuit Loop Fault conditions.

Preferably, four 'Loop Limit' circuits are included and electronically isolated from the rest of the module. Thus, the 'Loop Limit circuits' inside one module can be used for the sensing circuitry of a different module.

Preferred embodiments of this invention will now be described, by way of example only and with reference to the accompanying drawings.
Fig. 1 shows a perspective view of a module according to the present invention;

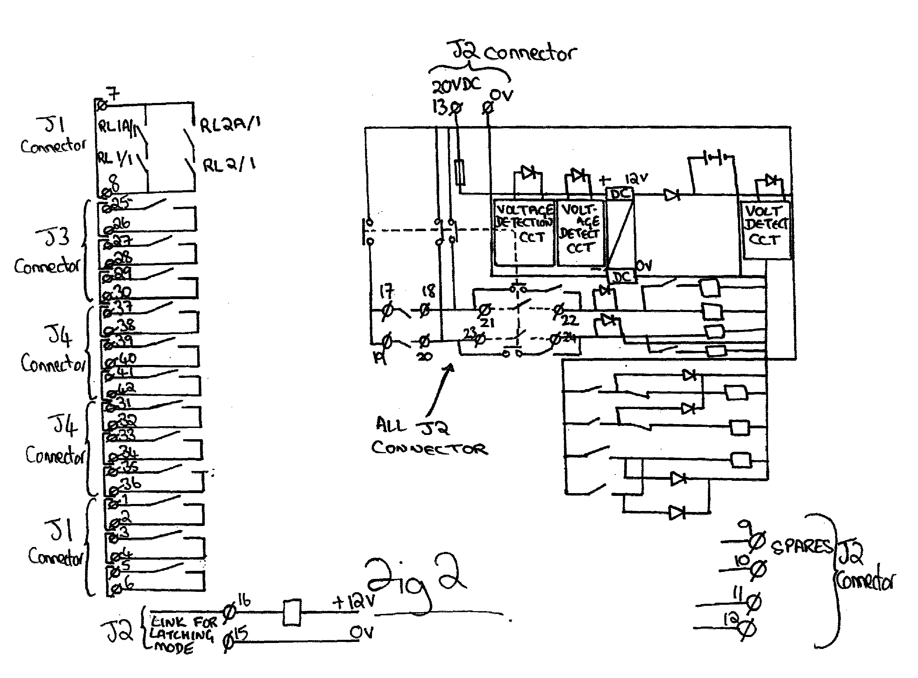

Fig. 2 shows a circuit diagram of a possible variation of the module;
Fig. 3 shows a circuit diagram of the display PCB;
Figs. 4, 5 and 6 show circuit diagrams of parts of the power PCB;
Figs. 7, 7a-7d show the sensing PCB circuitry; and
Figs. 8 to 10 show circuit diagrams of parts of the monitoring PCB.

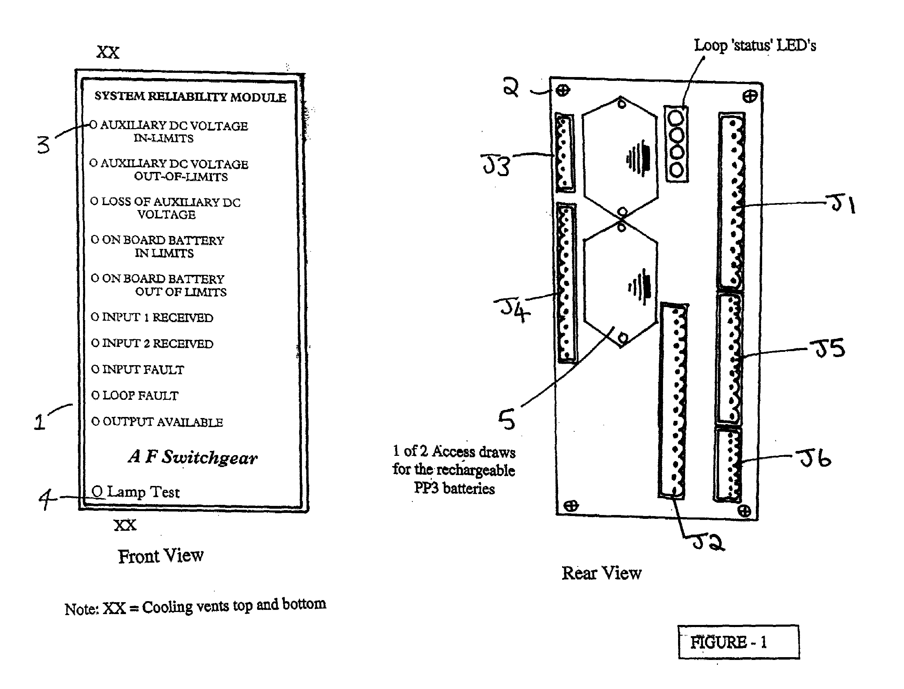

Referring to Fig. 1, the system comprises a front panel (1) and a rear panel (2) housed in a DIN standard case. The case is through panel mounted and secured using quick release panel mounting clips. The rear panel (2) is preferably a glass fibre panel with silk screen terminal identification.

Such system reliability modules are typically used within switch boards to verify correct operation and to provide a volt-free contact for the next stage of a control system. A typical mains failure stand-by system might employ five of these units.

Ten LEDs (3) on the front panel indicate operational status and an on-board lamp test button (4), preferably a touch sensitive button, is also provided to check the functioning of the LEDs.

Certain of the alarm functions (indicated by the LEDs) have three separate volt-free contact sets which allow connections to the various system components, namely the building management system (BMS), the alarm system (annunciator) and the process controller (PLC).

The auxiliary DC voltage is continually monitored. If the external supply fails, this is indicated by an LED and an internal battery provides back-up power. The internal batteries (preferably two PP3 rechargeable NIMH or NICAD batteries) are automatically recharged from the auxiliary DC supply. If required, these internal back-up batteries can be inspected or replaced during routine maintenance via access draw (5) in the rear of the module. Removing either battery, with a healthy auxiliary DC supply, does not affect operation of the module.

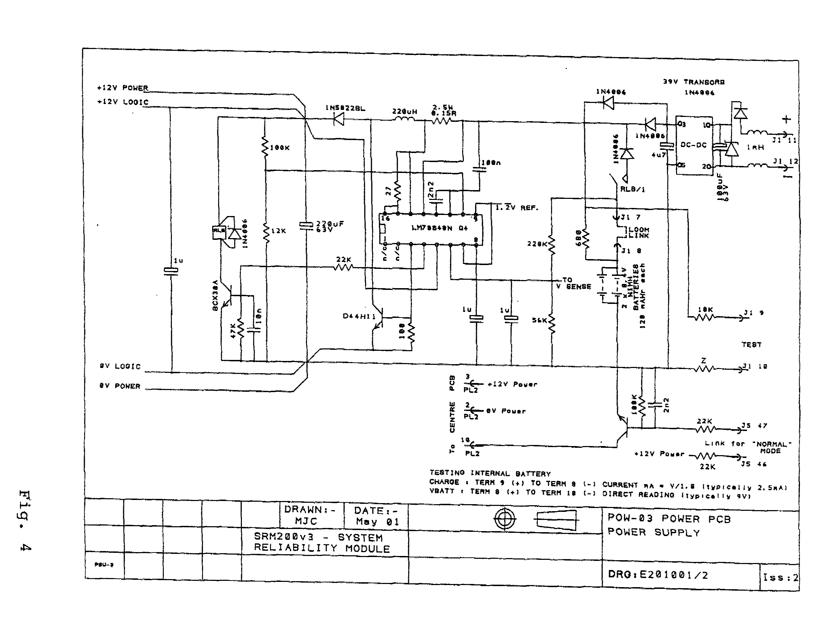

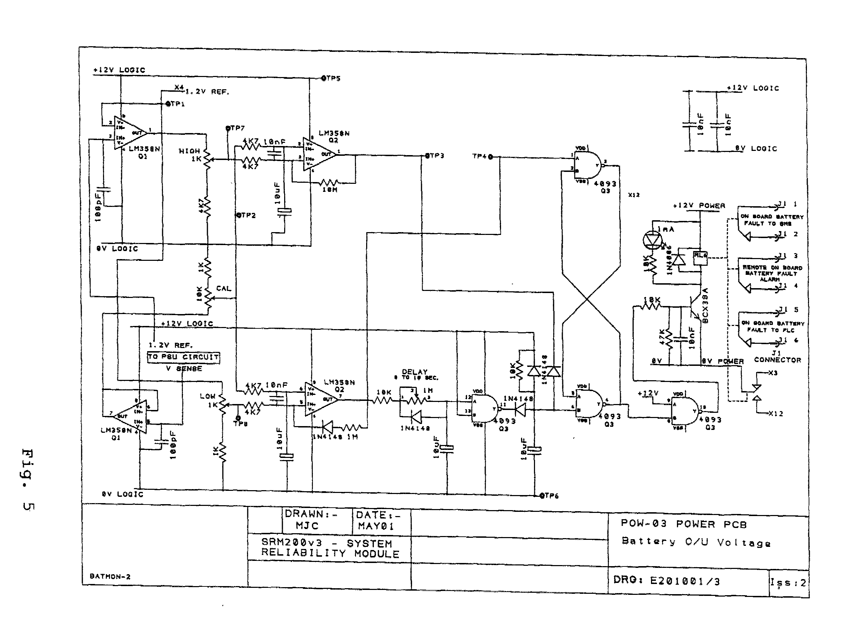

Referring to the circuit diagram of Fig. 4, once connected to the control panel and a valid DC supply voltage is applied, the internal batteries are 'charged' by the auxiliary DC supply. If the auxiliary DC supply falls, the internal batteries will automatically power the unit.

The internal battery is switched out of the circuit if either the battery voltage falls below a predetermined charge threshold e.g. 0.9V per cell (where 1.0V per cell is fully discharged), or if the unit is removed from the panel, indicated in Fig. 4 by 7 and 8 of connector J1 being open circuit.

The module operates automatically and can operate in either non-latching (standard) mode or latching (latch) mode operation. The operating mode is determined via connector J5 terminal 46,47 and the connections to J2 terminals 17, 18, 19, 20, 21, 22, 23 and 24.

In the standard or non-latching mode, four connections (two auxiliary, two-wire, volt-free normally open 'field contacts') are required from the 'switch function' being monitored. The two-wire volt-free normally open 'Relay Module Output' closes to verify correct operation of this 'switch function'.

In the latched mode, the field contacts latch on momentary operation and therefore require four further contacts (two auxiliary, two-wire, volt-free, normally closed 'de-latch field contacts') from the 'switch function' being monitored.

Various fault conditions can be indicated by respective LEDs on the front panel. In particular, the LEDs indicate when the auxiliary DC voltage is out of limits; the auxiliary DC voltage is lost; on-board battery is out of limits; or there is an input fault.

For any of these conditions, separate volt-free relay contacts are provided for the different system parts, i.e. the building management system (BMS), the alarm system and the process controller (PLC).

In the preferred embodiment, the front panel LEDs indicate the following status information:
Auxiliary DC voltage in limits - green
Auxiliary DC voltage out of limits - red
Loss of auxiliary DC voltage - red
On-board battery in limits - green
On-board battery out of limits - red
Input 1 received - green
Input 2 received - green
Input fault - red
Loop fault - red
Output available - green

The different status indicator combinations may be as follows:

With all parameters correct and both Input 1 and 2 received for:
- Auxiliary DC Voltage in Limits
- On Board Battery in Limits
- Input 1 Received
- Input 2 Received
- Output Available

If Input-1 is received without Input-2 for five seconds:
- Input 1 Received
- Input Fault

If Input-2 is received without Input-1 for five seconds:
- Input 2 Received
- Input Fault
- Output Available

If Input-1 is received but Input-2 Loop is 'out of limits' for five seconds:
- Input 1 Received
- Input Fault
- Loop Fault
- Output Available

If Input-2 is received but Input-1 Loop is 'out of limits' for five seconds:
- Input 2 Received
- Input Fault
- Loop Fault
- Output Available

If at least one Current Loop per channel is 'out of limits' for one second (Double Loop Fault):
- Loop Fault

The following rear panel indicators may also be provided:
- F1: Field Contact-1 current Loop 'valid'
- D1: De-Latch Contact-1 current Loop 'valid'
- D2: De-Latch Contact-2 current Loop 'valid'
- F2: Field Contact-2 current Loop 'valid'

These rear panel indicators assist in fault finding as they indicate correct operation of the Current Loops that are sensed by this module.

In Normal mode (mode link made) Loop-3 and Loop-4 de-latch circuits will not be required and their respective status LED's D1 and D2, on the rear of the unit, will not be lit.

For any of the following conditions:
- Auxiliary DC Voltage out of Limits
- Loss of Auxiliary DC Voltage
- On Board Battery Voltage out of Limits
- Input Fault (including Loop Faults)

Separate volt-free relay contacts are provided for:
- Building Management System (BMS)
- Central Alarm System
- Process Controller (PLC)

Preferably, the module should be calibrated in the factory and no user access should be provided. It is envisaged that various different versions may be made available, having different supply voltages. For example, it is expected that modules would be available in a 30V DC auxiliary supply version and a 24V DC supply version. The thresholds determining when a low or high auxiliary DC voltage condition exists will depend on the voltage supply for the particular version.

Similarly, the threshold for determining that the internal battery is not being charged may be set according to the supply voltage or may be common to all versions, the same applies for the on-board battery in limits and the on-board battery drop-out thresholds.

The following tables give preferred specifications for parts of the system.

| **AUXILIARY DC SUPPLY** | | | |
|---|---|---|---|
| | Level | Tolerance | Comments |
| Nominal Aux.DC Supply | 24V | | External 12cell sealed L.A Battery |
| Absolute Max. Aux. DC | 36V | | Transient Protected |
| Minimum Aux. DC | 18V | | |
| Aux. DC Volts in Limits | < 33.0V | +/- 0.1V | |
| | > 22.0V | +/- 0.1V | |
| Low Aux. DC Volts | < 22.0V | +/- 0.1V | 0.1 - 10s delay, Set to mid-scale |
| Loss of Aux. Dc Voltage | ≤16.0V | Approx. | (dependant on dc-dc converter) |
| | > + 0.5V | Approx. | Recovery from Loss of Aux. Dc |
| Quiescent Current | 470mA | | Nominal 24Vdc supply (see note 1) |
| Maximum Current | 800mA | | Minimum 16Vdc supply (see note 2) |

| **INTERNAL BATTERY** | | | |
|---|---|---|---|
| | Level | Tolerance | Comments |
| High Volts | ≥10.5 | 1.5 V/cell | |
| In Limits | 10.5 < > 7.0 | | |
| Low Volts | ≤7.0 | 1.0 V/cell | 0.1 - 10s delay, Set to mid-scale |
| Drop-out | < 6.3 | 0.9 V/cell | to protect the internal batteries |

| Number of Batteries | 2 | Connected in parallel |
|---|---|---|
| Type | NIMH PP3 | NICAD can be used |
| Capacity | 300 mAhr | 150mAhr each |
| Trickle Charge Rate | 6 mA | Approx. 3mA each (C / 50) |
| Back-up duration | 10 min | Approx. duration from fully charged state |
| Life expectancy | 5 years | Under optimum conditions |

| **INPUT SENSING** | | |
|---|---|---|
| Condition | Value | Comments |
| Input valid - Open Contact | 5.0 +/ - 1.0 mA | Current out of limits = Loop fault |
| Input valid - Closed Contact | 16.0 +/ - 2.0 mA | Current out of limits = Loop fault |
| Input Response | ≥40 mSec | Latch / De-Latch Time |
| Input Fault delay | 5 sec approx. | |
| Loop Fault - Loop open-circuit | 13V approx. | Open-circuit Loop voltage |
| Loop Fault - Loop short-circuit | 22 mA approx. | Maximum current per Loop |
| Loop Fault Delay | 1 sec approx. | |

| **RELAY CONTACTS** | | |
|---|---|---|
| | Rating | Comments |
| Relay Module Output N/C | 5A 230VAC | Term. 26 & 27 Resistive Load |
| Relay Module Output N/O | 5A 230VAC | Term. 14 & 15 Resistive Load |
| Input Fault | 1A 30VDC | Term. 28 & 33 Resistive Load |
| Aux. DC Volts out of Limits | 1A 30VDC | Term. 34 & 39 Resistive Load |
| Loss of Aux. DC volts | 1A 30VDC | Term. 40 & 45 Resistive Load |
| On-Board Batt. out of Limits | 1A 30VDC | Term. 1 to 6 Resistive Load |

For Inductive Loads, the currents above MUST be derated to 14% (x 0.14).

| **ENVIRONMENT** | | |
|---|---|---|
| | | Comments |
| Storage Temperature | - 25 to + 70 deg.C | |
| Operating Temperature | -10 to + 40 deg.C | |
| Note 1. Correct operation, 'Normal (non-latching) mode', both field contacts closed. | | |
| Note 2. Fault condition, 'Latching mode', all (4) Loop circuits individually shorted. | | |

The following tables give some indication of the likely parameters for different versions of the module.

| 24VDC AUX. SUPPLY VERSION | | | |
|---|---|---|---|
| | Threshold | Delay | Comments |
| Aux. DC Volts in Limits | > 23.5 V | no delay | RL4 energised |
| | < 32.0 V | | |
| Aux. DC Voltage out of limits | > 32.0 V | no delay | RL4 de-energised |
| | < 23.5 V | 0.1 - 10s | |
| Quiescent Current | | At 24V DC | All conditions normal |
| Maximum Current | | At 24V DC | Worst case conditions + Lamp Test |
| AUX DC | | | RL5 de-energised |
| Operating Range: 18 -33 V | | | |
| Operating Limits: 9 - 36V | | | |
| Loss of AUX DC: <8V | | | |

| COMMON FEATURES | | | |
|---|---|---|---|
| | | | Comments |
| On-board battery | 2xPP3 | in Parallel | 7 cells/240mAH |
| On-board battery float charging | 9.8V | @2.4mA | 1.4V/cell |

| | Threshold | Delay | Comments |
|---|---|---|---|
| On-Board Battery in Limits | > 1.7V | no delay | RL6 energised |
| | > 11.2V | | |
| On-Board Battery out of limits | > 11.2V | delay | RL6 de-energised |
| | < 7.7V | 0.1 - 10s | |
| On-Board Battery drop-out | < 6.3V | no delay | 0.9V / cell RLB de-energised |

The module preferably has two internal batteries of the PP3 NIMH type but NICAD batteries could also be used. The batteries preferably have a capacity of 150mAH with a trickle charge rate of 6mA and an approximate back-up duration of 10 minutes from a fully charged condition. The life expectancy of such batteries is around five years (under optimum conditions).

The use of NIMH batteries minimises the 'memory effect'. The batteries are easily replaceable without needing to open the module and can be replaced with the module in service, provided a healthy DC auxiliary supply is present.

The voltage of the internal batteries (typically 1.4V per cell) is monitored and indicated by means of an LED on the front panel and connected with an alarm output.

The batteries preferably have an automatic drop-out (typically at 0.9V per cell) to protect the batteries. The batteries are disabled when the module is removed from the control panel, i.e. when connector J1 in Fig. 4 is removed.

The module itself is preferably constructed to allow through-panel mounting and to be built into a DIN standard case. The connectors are preferably two-piece screw clamp industry standard connectors. The electronics are incorporated in a quadruple PCB assembly which plugs together to simplify production. The PCBs themselves will be described in more detail below.

The module is suitable for latching and non-latching modes of operation.

The main power supply is preferably of a switch mode (SMPS) design for maximum efficiency and minimal heat dissipation and the internal battery supports the SMPS if the DC supply fails.

The various terminal connections are summarised in the following table:

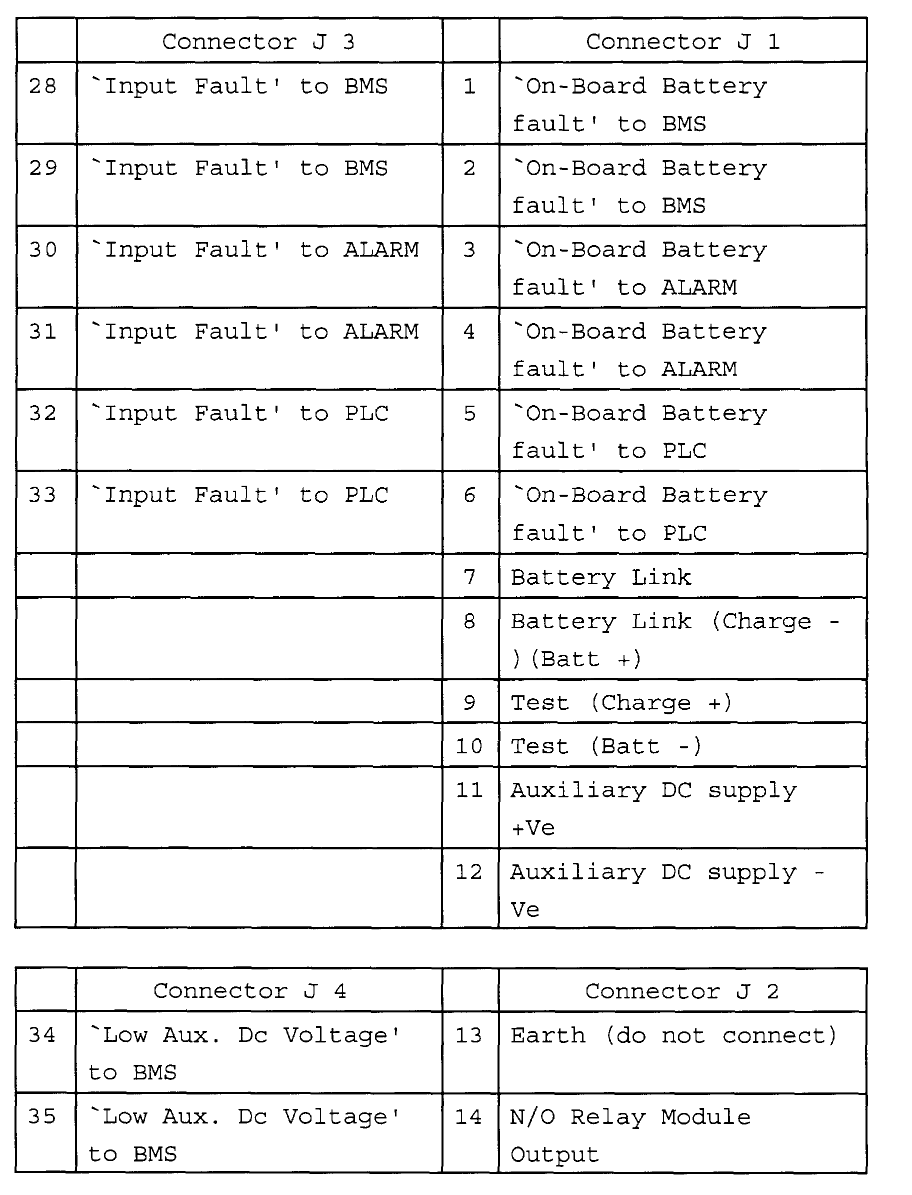

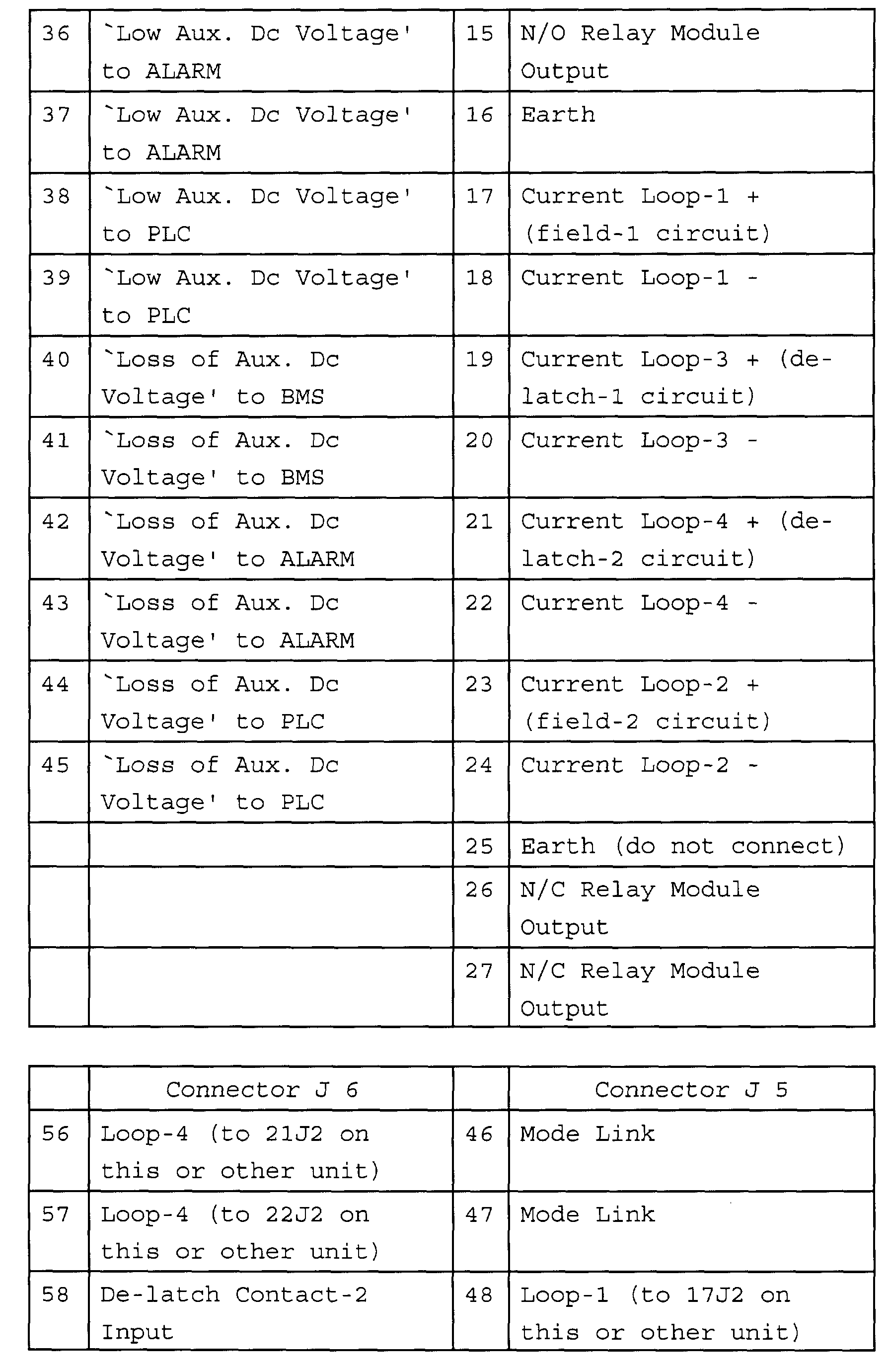

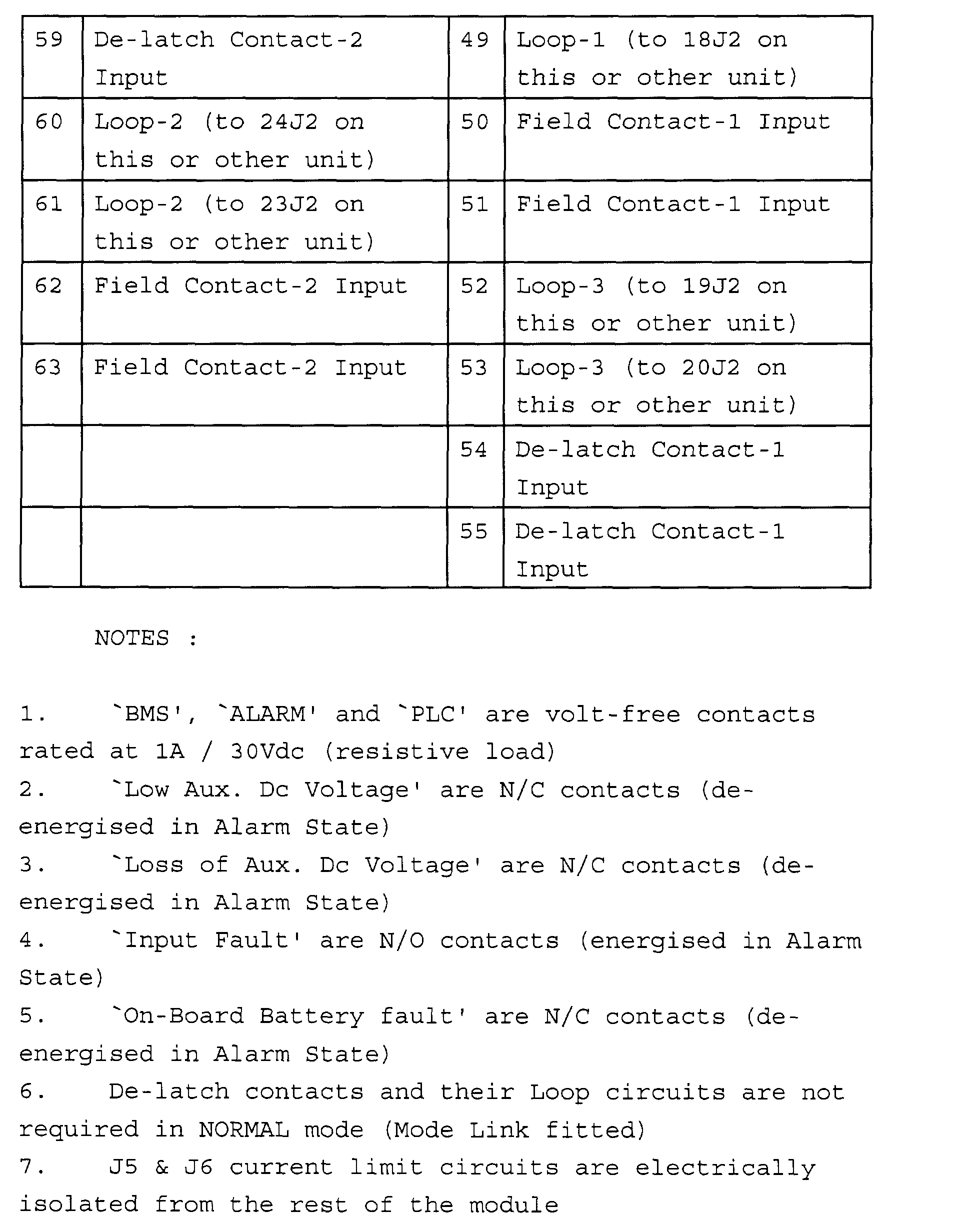

As mentioned above, the module preferably has a quadruple PCB construction. Ten sections of circuitry are divided between the four PCBs.

The first PCB is the 'display PCB'. This PCB is located directly behind the front panel and carries the LEDs, the driver circuits, the lamp test circuitry and push-switch and the inter-board connections.

The second PCB is the 'power PCB' which carries three sections of circuitry:
a) the switch-mode power supplies, NIMH batteries and the drop-out relay; and
b) the field contact (Loop Limit) circuits.

The third PCB is the "sensing PCB" which carries three sections of circuitry:
a) Loop current monitoring circuitry;
b) Power relays; and
c) decoding logic (sub-board).

The fourth PCB is the 'monitoring PCB' which also carries three sections of circuitry:
a) input fault timer and a common input fault relay;
b) auxiliary DC voltage "out of limits" and fault relay; and
c) loss of DC auxiliary voltage fault relay.

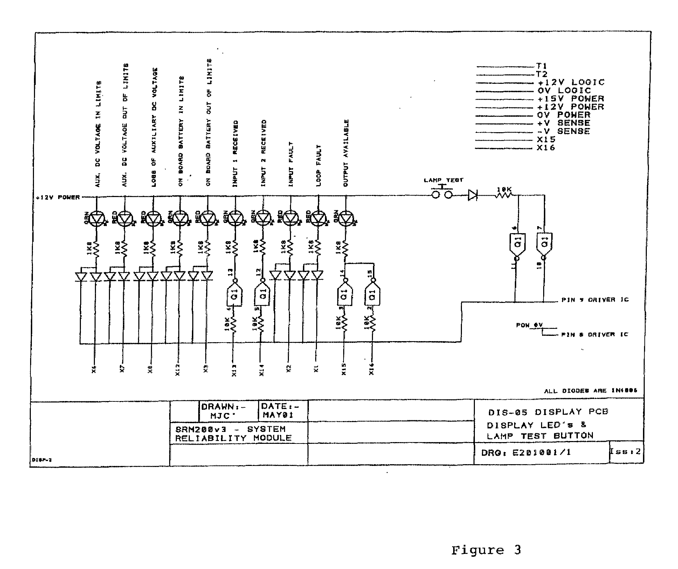

Fig. 3 shows a circuit diagram of the display PCB.

A transistor driver is used to switch the LEDs from logic signals. A feature of this IC is the internal pull-down diodes connected to each output with their common cathodes connected to pin 9. Thus, momentarily connecting pin 9 to the common negative terminal will test all of the relevant LEDs.

Momentary activation of the lamp test button (4), which is mounted behind the front label, connects the +12V power line through the blocking diode and current limiting resistor into two drivers. These are connected in parallel to sink sufficient current for the ten LEDs.

Seven of the LEDs are switched directly via open collector transistors in other circuit, and, therefore steering diodes are included to complete the lamp test feature.

The other three PCBs plug in via single in-line (SIL) headers.

This modular construction has the advantages of allowing quick assembly, reduced labour costs, and fault finding in that individual PCBs can be inspected, recalibrated or replaced as required. The costs of updates and re-designs are also minimised.

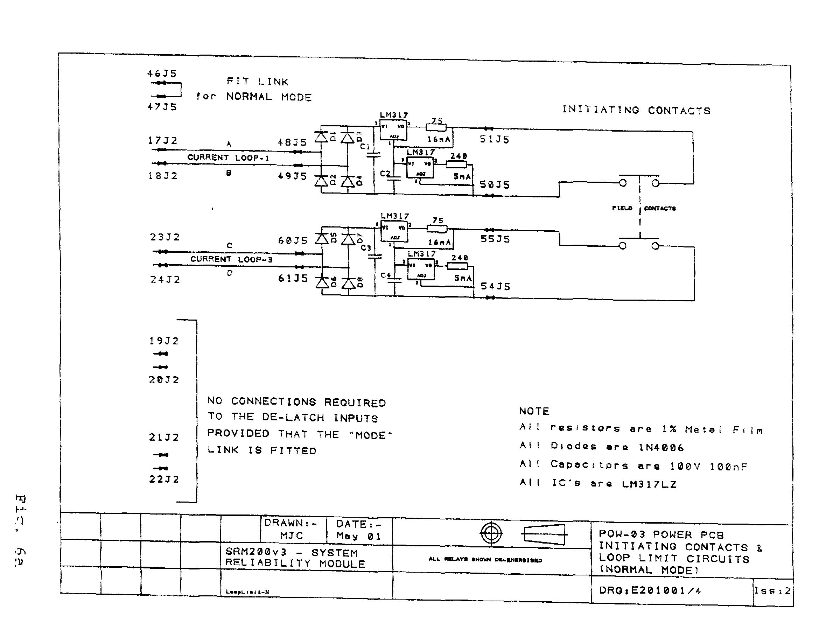

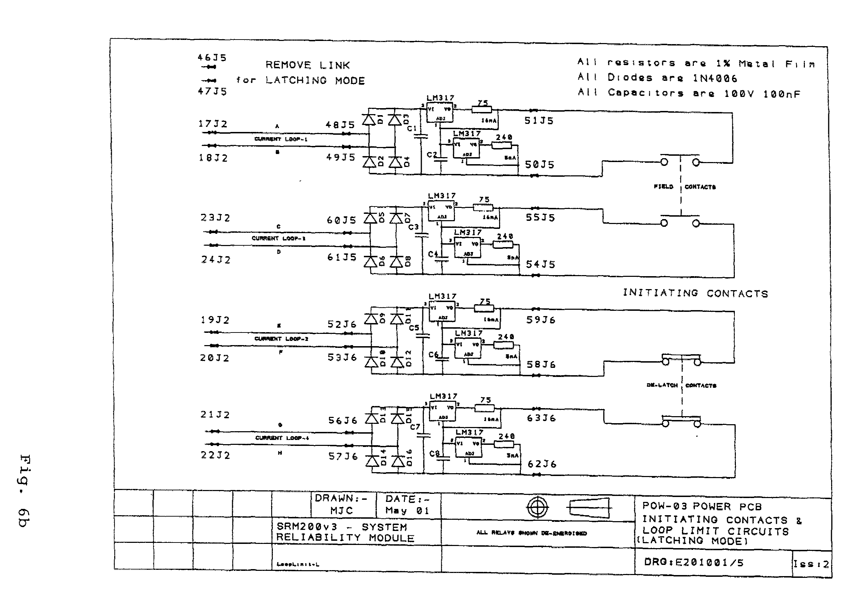

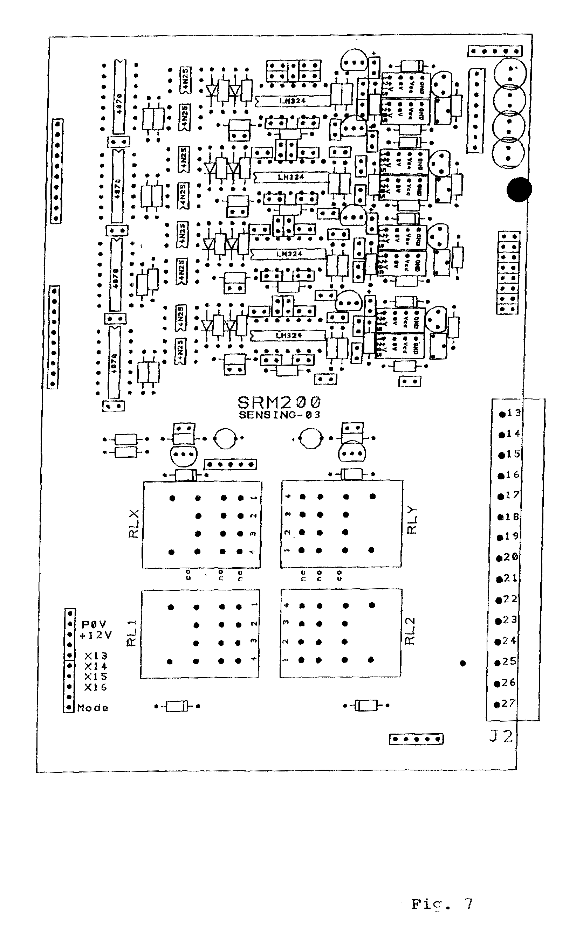

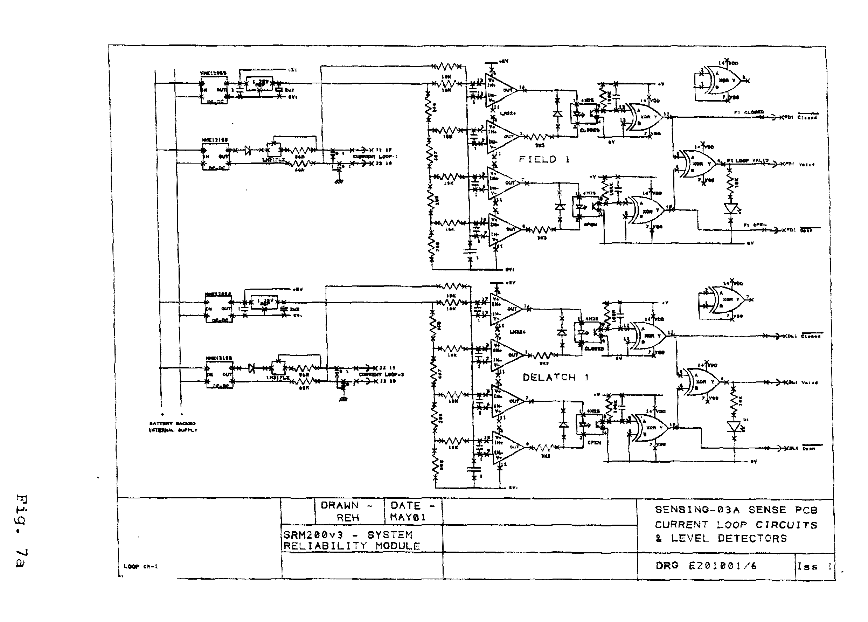

Fig. 4 is a schematic circuit diagram of the power supply PCB. Fig. 5 is a schematic circuit diagram of the power PCB battery in limits circuitry. Fig. 6a is a schematic circuit diagram of the power PCB field contact circuitry for normal operation, while Fig. 6b is for latching operation.

The module is powered from an Auxiliary Dc Supply (term. 11 & 12 J1) via a 15W DC-DC converter to provide a constant 15Vdc over a wide supply range (i.e. 16V to 36Vdc).

The 15Vdc is wire or'ed via steering diodes with the internal 8.4V rechargeable battery to feed a purpose designed 'step-up' switch mode power supply (SMPS), designed around the proven LM78S40. This device has an accessible 1.2V Band-gap reference and universal op-amp.

The battery relay RLB switches the batteries into circuit (provided that terminals 7 and 8 of connector J1 are connected) whenever the supply is connected for the first time, i.e. if the module is re-fitted into the control panel.

While the DC-DC converter outputs I5V, the step-up SMPS is not running and approximately 13Vdc powers the module. However, if the 15Vdc collapses, the on-board battery via the step-up SMPS will maintain 11.5V at the output.

The on-board battery voltage is buffered and fed back to minimise battery drain by the monitoring circuitry. An op-amp is used to compare the battery voltage, via a potential divider, with a 1.2V reference. If, during a supply failure, the battery voltage falls below 6.3V (7 cells at 0.9V per cell), the battery relay (RLB) will de-energise, switching the battery out of circuit and powering down the module in a 'guillotine' action.

A 'Transorb' device provides transient protection of the auxiliary DC supply. A Common-Mode suppression choke minimises noise from being reflected back into the DC supply.

Referring to Figure 5, on initial power-up the latch is reset and relay RL6 de-energised, indicating that the internal battery voltage is out of limits.

If the battery voltage rises above the LOW threshold, e.g. 7.0V (1.0V per cell) and below the HIGH threshold, e.g. 10.5V (1.5V per cell) the latch is set and RL6 energises, indicating that the battery is within limits.

If the battery voltage is above the HIGH threshold or falls below the LOW threshold for a DELAY time (0.1 to 10 seconds), the latch is reset and RL6 de-energised, to indicate the "out of limits" fault condition.

Front panel status LEDs are switched via a spare contact set on RL6 and thus confirm that the relay is functioning correctly.

Referring now to Fig. 6a, in the standard non-latching mode, closing field contact 1, i. e. terminals 50 and 51 of connector J5 energises relay RLX which, in turn, energises relay RL1. This redundancy prevents false operation if the RL1/1 contacts are fused or welded.

Closing field contact 2 (terminals 54 and 55 of J6) energises relay RLY which, in turn, energises relay RL2. This redundancy prevents false operation if RL2/4 contacts are welded.

Referring now to Fig. 6b, in the latching mode, closing field contact 1 (terminals 50 and 51 of J5) operates as in the standard mode described above, except that only momentary operation is required since relays RLX and RL1 are latched via the decoding logic. They are unlatched by momentary operation of the de-latching field contact (terminals 58 and 59 of J6).

Similarly, field contact 2 operates as in the standard mode except only momentary operation is required since relays RLY and RL2 are latched via the decoding logic. They are, again, unlatched by the de-latching field contact (terminals 62 and 63 of J6). Timer T1 input is energised if relay RL1 is energised without RL2. Timer T1 input is energised if relay RL2 is energised without RL1.

Relay module output (terminals 14 and 15 of J2) closes if either RL1 and RLX or RL2 and RLY operate. Relay module output (terminals 26 and 27 of J2) open if RLX or RLY or RL2 operate.

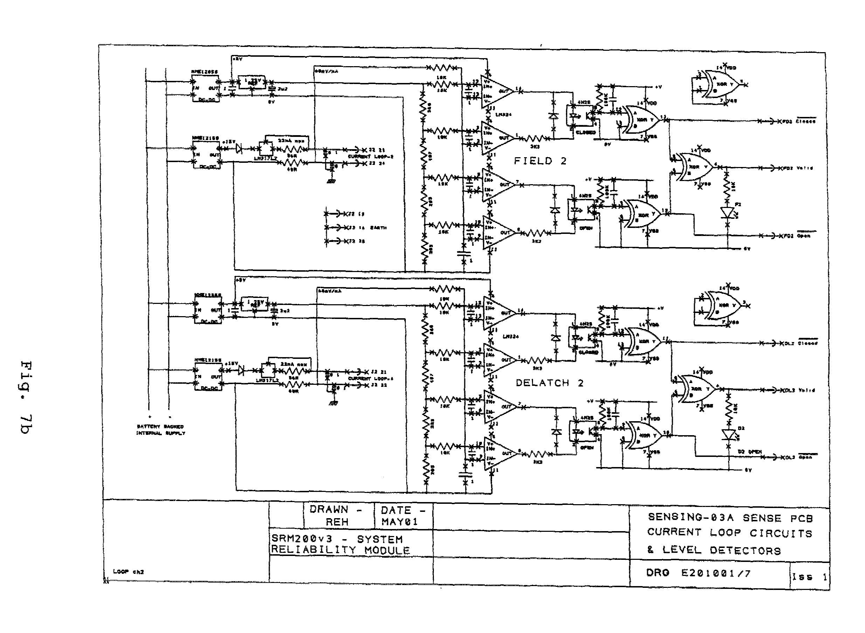

Fig. 7 shows a circuit diagram of the sensing PCB. Fig. 7a shows the channel-1 current loop circuitry of the sensing PCB. Fig. 7b shows the channel-2 current loop circuitry of the sensing PCB. Fig. 7c shows the decoding logic circuitry of the sensing PCB. Fig. 7d shows the power relays of the sensing PCB.

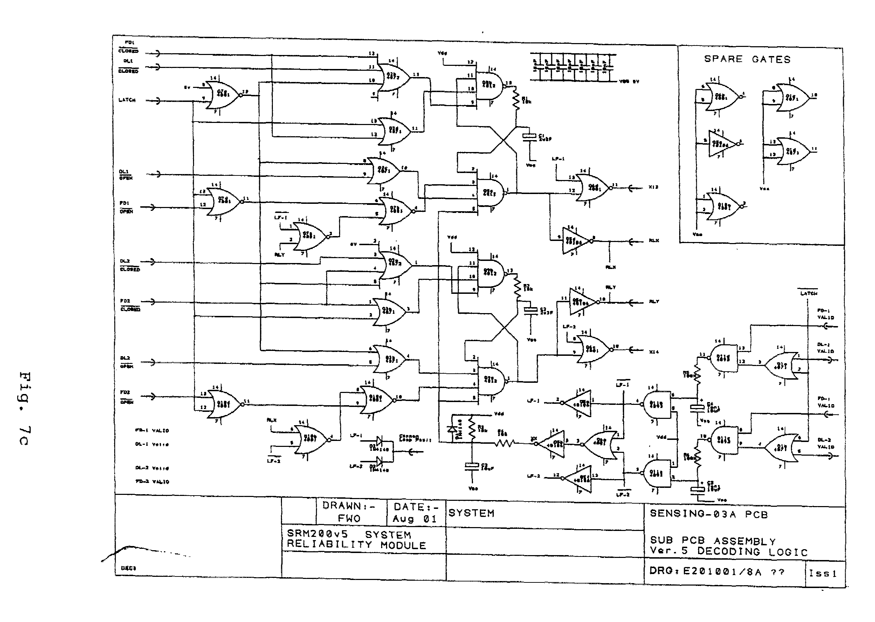

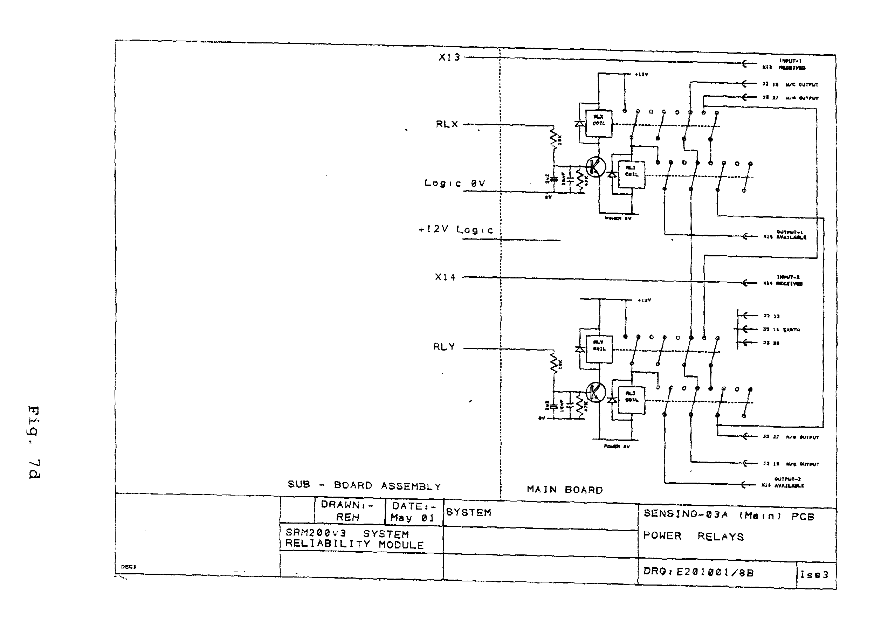

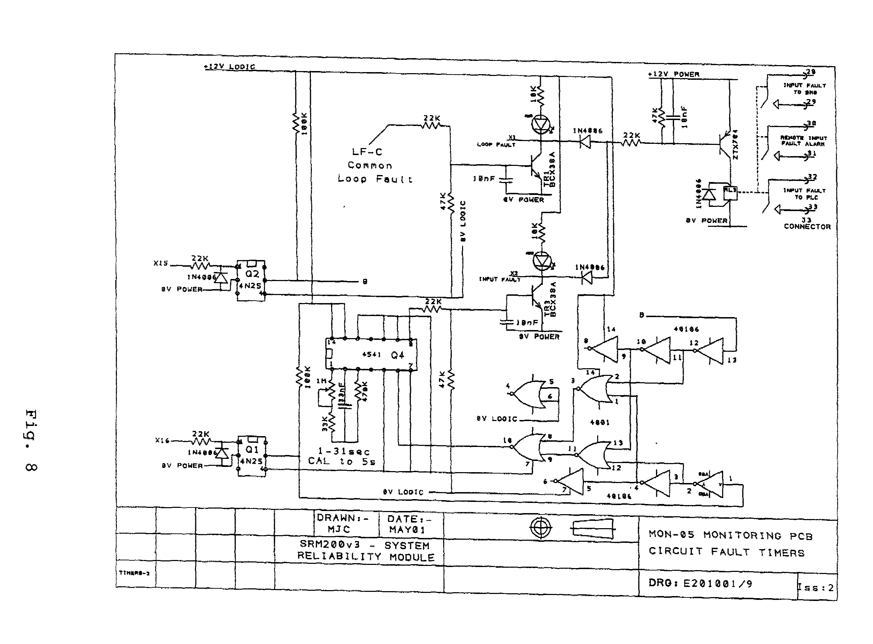

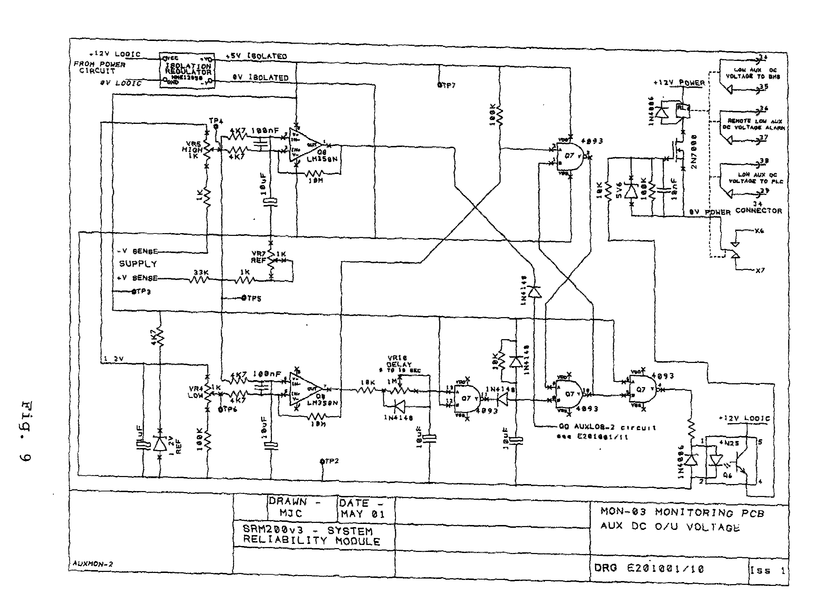

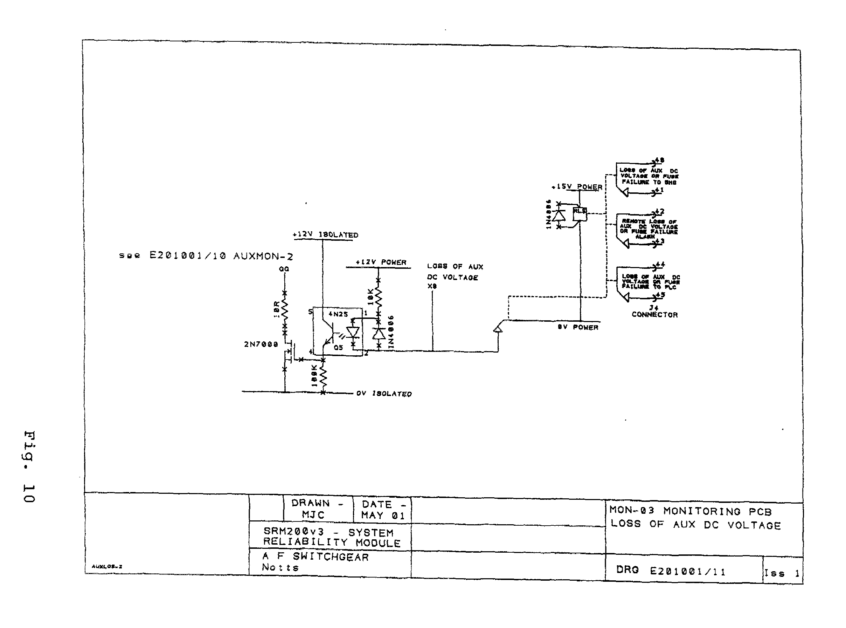

Fig. 8 shows a schematic circuit diagram of the circuit fault timer circuitry of the monitoring PCB. Fig. 9 shows a schematic circuit diagram of the auxiliary DC voltage in limits circuitry of the monitoring PCB and Fig. 10 shows a schematic circuit diagram of the loss of auxiliary DC voltage circuitry of the monitoring PCB.

Relay RL3 energises to indicate a 'circuit failure' if either:
a) RL2 energises without RL1 for time delay T1; or
b) RL1 energises without RL2 for time delay T1; or
c) an "Input-2" Loop Fault is indicated for time delay T1; or
d) an "Input-1" Loop Fault is indicated for time delay T1.

However, RL3 is non-latching and will de-energise if there is no longer a fault condition.

The on-board LEDs provide indications to aid testing during manufacture.

On initial power-up the latch is reset, de-energising relay RL4, indicating that the auxiliary DC supply voltage is out of limits. If the auxiliary DC voltage rises above the LOW threshold, e. g. 22V and below the HIGH threshold, e. g. 33V, the latch is set and RL4 energises to indicate that the auxiliary DC voltage is within limits.

If the auxiliary voltage rises above the HIGH threshold (no delay) or falls below the LOW threshold for a DELAY time (0.1 to 10 seconds) the latch is reset and RL4 de-energises, to indicate the "out of limits" fault condition.

Front Panel status LEDs are switched via the spare contact set on RL4 and thus confirm that thte relay is functioning correctly.

As this circuitry is directly sensing the Auxiliary DC Supply, a 1W DC-DC converter is employed to isolate the supply rails. Likewise, an opto-isolator is required to connect the logic output to the relay driver circuitry.

If "Loss of Auxiliary DC Supply" is sensed, QQ is pulled low to reset the latch (bypassing the Delay) and de-energising RL4 to indicate an "out of limits" fault condition.

A feature of the 15W DC-DC Converter is that the 15V output collapses, if the Auxiliary DC Supply voltage falls below a nominal threshold. Thus, RL5 is connected directly to the 15V output, de-energising to indicate 'Loss of Auxiliary DC Supply'.

The Front Panel status LED is switched via the spare contact set on RL5 as is the opto-isolator to drive QQ via the 2N7000. This ensures that the Auxiliary DC Supply is also indicating 'out of limits'.

The opto-isolator is required because the 'Auxiliary DC Supply monitoring circuitry' is electrically isolated from the other circuitry.

On initial power-up with the auxiliary DC supply 18V, the DC-DC convertor (Fig. 4) outputs 15V, energising relay RL5 to indicate that the supply voltage is not lost. If the auxiliary DC supply falls below approx 16V, the 15V collapses and RL5 de-energises to indicate loss of Auxiliary DC supply.

Further J1 terminals (9 and 10) together with terminal 8 are used to externally check 'internal-battery' voltage and/or internal-battery charge current.

Briefly, the system is operated as follows:

Once connected to the control panel and a valid auxiliary DC supply voltage is applied, the internal battery is switched into circuit and continually 'Trickle' charged. Whenever the supply is interrupted (or falls sufficiently low) the internal batteries will power the unit.

However, the internal battery can only be switched out of circuit if
a) the battery voltage falls below 0.9V/cell (where 1.0V/cell is fully charged)
b) terminals 7 and 8 of connector J1 are open circuit (i. e. unit removed from the control panel)

The SRM200 operates automatically and requires no user adjustment with the operating mode selected by connection.

### Standard Mode (non-latching):

Mode Link fitted and de-latch circuits not required. Contact closure (16mA) sensed in either (Field Contact) current loop will energise the module output. Contact open must be sensed (5mA) in both (Field Contact) current-loops to de-energise the module output.

### Latched Mode:

Mode link omitted and de-latch circuits required. Momentary contact closure sensed (16mA pulse > 40mSec) in either (Field Contact) Current Loop to latch the relevant input circuit and energise the module output. Momentary contact opening sensed (5mA >40mSec) in either (de-latched contacts) current loops will unlatch the relevant input circuit. Both circuits must unlatch in order to de-energise the module output.

If a 'Loop Fault' condition occurs on either current loop of one channel, the module output will be driven from the remaining working channel. In the event of a 'double loop fault' where at least one current loop per channel is 'out of limits' the module output will de-energise. However, if the 'Loop Fault' condition is removed, the module output will not change state.

A 'Loop Fault' condition means that the respective Loop Current is 'out of limits'.

In a modified version, the module operates in the same way as described above, except that it cannot power the current loops, only monitor those of another module.

The table below shows the preferred specification for such a module.

| AUXILIARY DC SUPPLY | | | |
|---|---|---|---|
| | Level | Tolerance | Comments |
| Nominal Aux.DC Supply | 24V | | External 12cell sealed L.A Battery |
| Absolute Max. Aux. DC | 36V | | Transient Protected |
| Minimum Aux. DC | 18V | | |
| Aux. DC Volts in Limits | < 33.0V | +/- 0.1V | |
| | > 22.0V | +/- 0.1V | |
| Low Aux. DC Volts | < 22.0V | +/- 0.1V | 0.1 - 10s delay, Set to mid-scale |
| Loss of Aux. Dc Voltage | ≤16.0 | Approx. | (dependant on dc-dc converter) |
| | > +0.5V | Approx. | Recovery from Loss of Aux. Dc |
| Quiescent Current | ≤470mA | | Nominal 24Vdc supply (see note 1) |
| Maximum Current | ≤600mA | | Approx.16Vdc supply (see note 1) |

| INTERNAL BATTERY | | | |
|---|---|---|---|
| | Level | Tolerance | Comments |
| High Volts | ≥10.5 | 1.5 V/cell | |
| In Limits | 10.5 < > 7.0 | | |
| Low Volts | ≤7.0 | 1.0 V/cell | 0.1 - 10s delay, Set to mid-scale |
| Drop-out | ≤6.3 | 0.9 V/cell | to protect the internal batteries |

| Number of Batteries | 2 | Connected in parallel |
|---|---|---|
| Type | NIMH PP3 | NICAD can be used |
| Capacity | 300 mAhr | 150mAhr each |
| Trickle Charge Rate | 6 mA | Approx. 3mA each (C / 50) |
| Back-up duration | 10 min | Approx. duration from fully charged state |
| Life expectancy | 5 years | Under optimum conditions |

| INPUT SENSING | | |
|---|---|---|
| Condition | Value | Comments |
| Input valid - Open Contact | 5.0 +/ - 1.0 mA | Current out of limits = Loop fault |
| Input valid - Closed Contact | 16.0 +/ - 2.0 mA | Current out of limits = Loop fault |
| Input Response | ≥40 mSec | Latch / De-Latch Time |
| Input Fault delay | 5 sec approx. | |
| Loop Fault - Loop open-circuit | 13V approx. | Open-circuit Loop voltage |
| Loop Fault - Loop short-circuit | 22 mA approx. | Maximum current per Loop |
| Loop Fault Delay | 1 sec approx. | |

| RELAY CONTACTS | | |
|---|---|---|
| | | Comments |
| Relay Module Output N/C | 5A 230VAC | Term. 26 & 27 Resistive Load |
| Relay Module Output N/O | 5A 230VAC | Term. 14 & 15 Resistive Load |
| Input Fault | 1A 30VDC | Term. 28 & 33 Resistive Load |
| Aux. DC Volts out of Limits | 1A 30VDC | Term. 34 & 39 Resistive Load |
| Loss of Aux. DC volts | 1A 30VDC | Term. 40 & 45 Resistive Load |
| On-Board Batt. out of Limits | 1A 30VDC | Term. 1 to 6 Resistive Load |

For Inductive Loads, the currents above MUST be derated to 14% (x 0.14).

| ENVIRONMENT | | |
|---|---|---|
| | | Comments |
| Storage Temperature | - 25 to + 70 deg.C | |
| Operating Temperature | -10 to + 40 deg.C | |
| Note 1. Correct operation, 'Normal (non-latching) mode', both field contacts closed. | | |

The following tables show the preferred terminal connections for such a module.

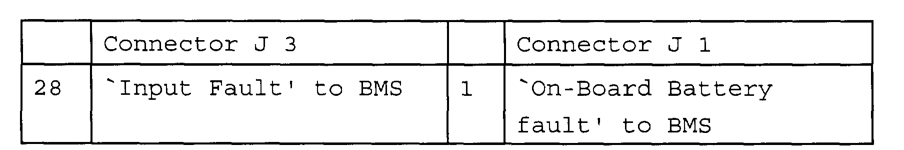

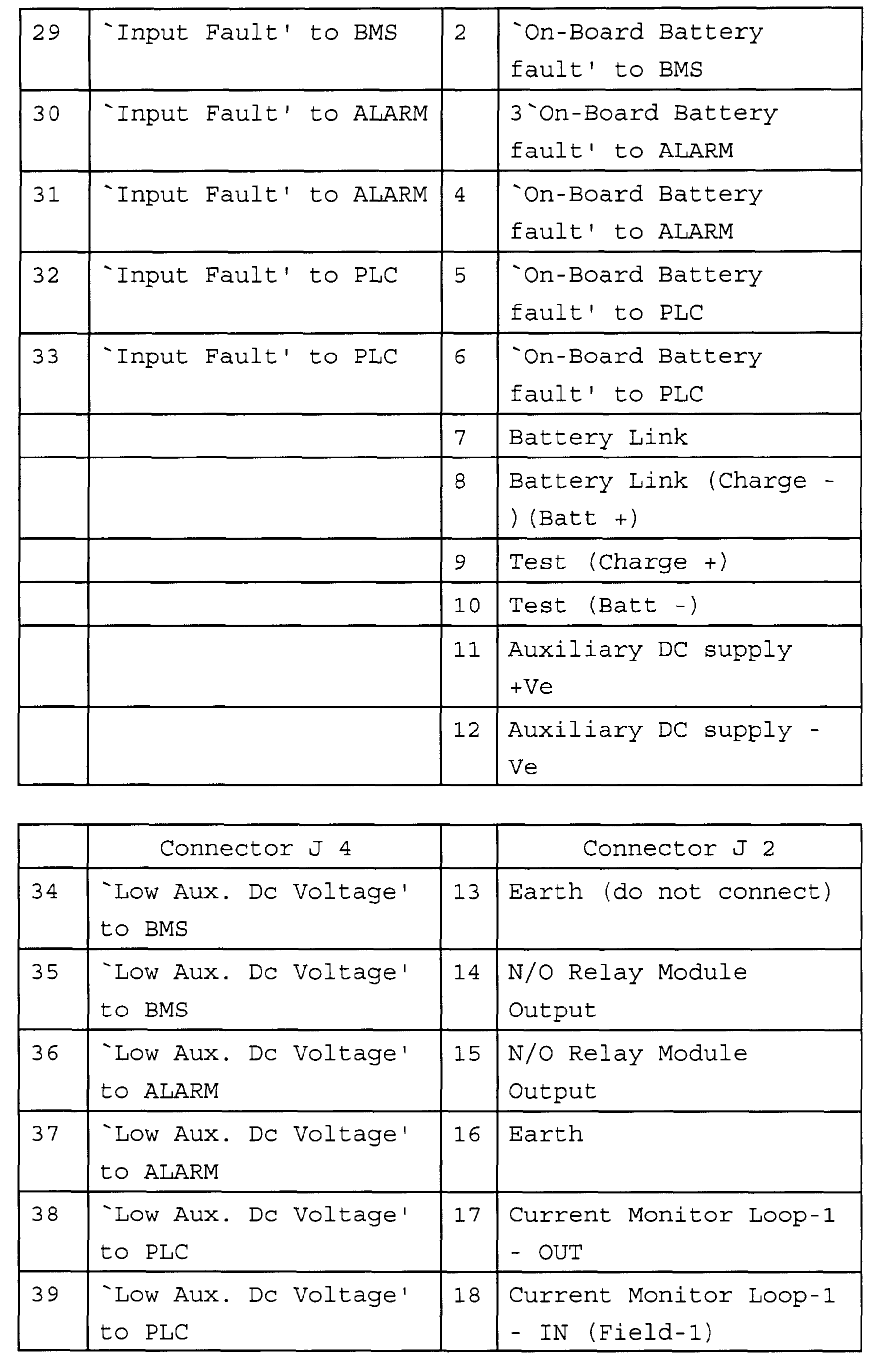

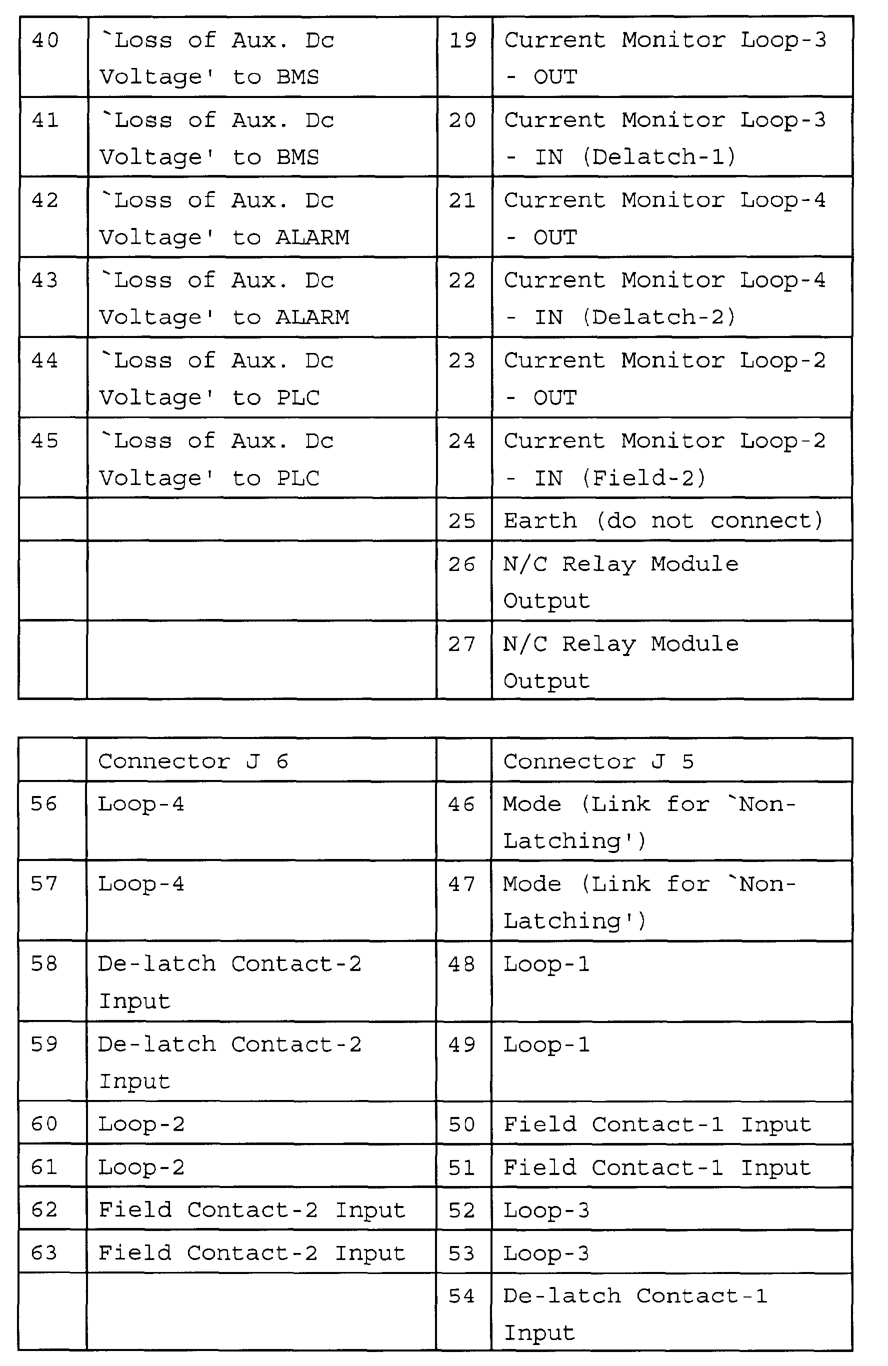

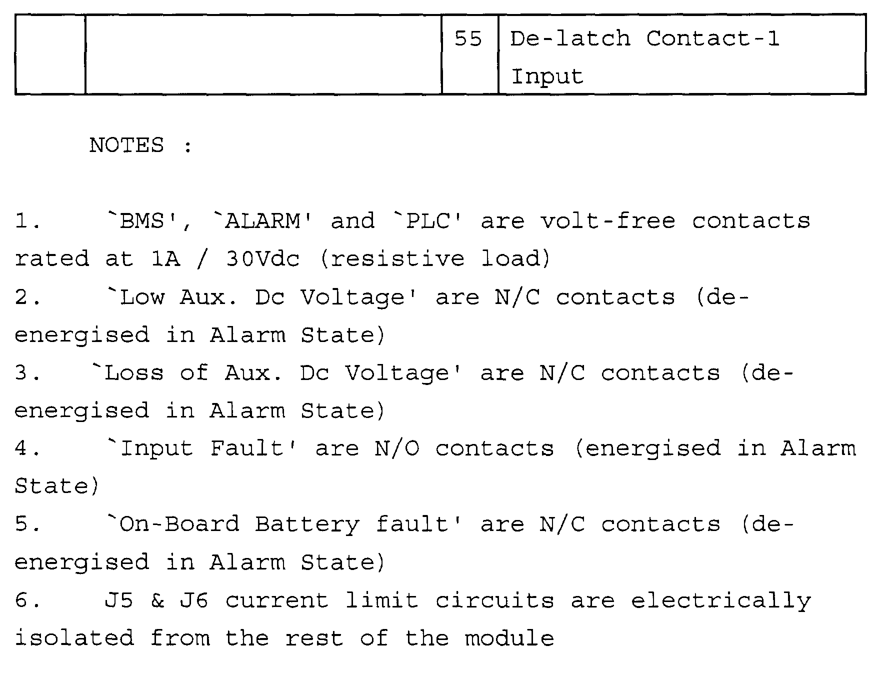

## Claims

1. A system reliability module comprising control signal input means; contacts responsive to input control signals; output means providing signals in response to the state of said contacts; a main power supply and an internal back-up battery power supply; **characterised by** means for monitoring said main power supply and for automatically connecting said back-up power supply when said main power supply falls below a predetermined level; and means for monitoring said input means, said contacts and said output means and for indicating faults or failures.

2. A system reliability module as claimed in claim 1, wherein said means for monitoring and indicating faults or failures comprises a plurality of LEDs arranged to indicate the nature of the fault and/or failure concerned.

3. A system reliability module as claimed in claim 2, further comprising LEDs to indicate the stage the main power supply and/or the internal battery.

4. A system reliability module as claimed in any preceding claim wherein several components of the module have an associated alarm function, and wherein means are provided to indicate the status of each alarm function.

5. A system reliability module as claimed in any preceding claim, said module being switchable between a non-latching mode and a latching mode.
